# EUROPEAN PATENT APPLICATION

(11) **EP 1 609 364 A2**
(43) Date of publication of application: **28.12.2005**
(21) Application number: 05013459.2
(22) Date of filing: 22.06.2005
(51) Int. Cl.: A21C 11/00

(54) **A method and apparatus for forming a dough, and a dough form therefrom**

(30) Priority: 22.06.2004 JP 2004212313; 25.02.2005 JP 2005089730
(71) Applicant: Sataco Co., LTD., Tokyo (JP)
(72) Inventor: Aonuma, Saburo, Tokyo (JP)
(74) Representative: Wagner, Karl H.

(57) **Abstract**

An apparatus for flattening a piece of fermentable dough, comprises a vertically movable table (6) arranged in a horizontal direction and a heated upper plate (51) arranged upwardly apart from the table, an driving means (15) connected to the table (6) for moving the table upward and downward, a tray (7) detachably installed on the table, a sensor (46) for detecting a position or a speed of the table, and a regulator (30) for controlling a moving speed of the table, wherein the dough placed on the tray (7) is pressed and contacted with the heated upper plate (51) so that the contacted layer of dough is promptly fermented and soften to spread into a flattened dough crust.

## Description

### Field of the Invention

The present invention relates to a method and apparatus for flattening fermentabl dough while heating the dough to accelerate a dough fermentation and a dough crust obtained therefrom such as pizza pies.

### Background of the Invention

Conventionally, a task for spreading and forming fermentable dough is manually performed to spread each a quantity of dough. Specifically, in making pizza pies, fermentable dough are typically prepared by mixing wheat flour, sugar, yeast fungi and the like. The mixture is then kneaded and divided into several dough balls to be made round individually and packed in plastic bags. Thereafter, the dough balls in plastic bags are kept and stored in a freezer. When it need to flatten the dough balls, the dough ball is taken out from the freezer and fermented in a refrigerator at 2°C to 5°C for 10 to 12 hours (a primary fermentation process). Then, the raised dough balls are pressed to liberate gas from the fermentation and then, they are put back into the refrigerator it to be fermented at 2°C to 5°C for another 10 to 12 hours (a secondary fermentation process). Then, prior to baking, the secondarily fermented dough balls are manually spread into crusts having a thickness of about 2 mm to 5 mm. At pizzerias which serve a guest a made-to-order pizza, a method and an apparatus for forming a pizza crust having a smooth finished surface and a soft texture and good feeling when eaten after baking in a short time have been desired.

Japanese Open Patent publication No. 2001-505064 discloses that an apparatus preparing pizza which includes all steps from kneading of dough to baking a pizza. In the step of flattening dough of the apparatus, pieces of dough loaded on a transporting plate are pressed into a thin disk shape crust by a heated press plate. However, it does not describe the relation between a fermentation states and a pressing speed of the dough.

US Patent Nos. 5,800,844; 5,469,779; 4,559,002; and 4,417,867 disclose dough press machines for preparing pizza crusts. These press machines comprise an upper plate moving to upward and downward and a fixed lower plate respectively, the upper plate includes a heating unit to enhance dough relaxation without baking it. These press machines press and form dough within 10 seconds. A pressing time or a thickness of crust is adjustable by manually setting in these press machines. However, they do not describe that a process of pressing fermentable dough, i.e. yeast raised dough, or a process of accelerating ferment dough by the dough press machine.

The present invention relates to a method for flattening dough of a type of pan to which yeast is added to ferment it. Wheat flour is mixed with sugar, yeast and the like, the mixture is kneaded into dough, and heat is applied to the dough to ferment the yeast in the flour, to generate carbon dioxide gas. It is important for flattened dough crust having a soft texture and good feeling when eaten to form even honeycomb structures of bubbles of gas from fermentation in inner parts of the flattened crust. However, if the fermentable dough is rapidly pressed without regard to the fermentation process, in the case of press-forming the dough at the stage of the second fermentation, a good raised dough crust above described (a pizza crust) cannot be obtained for the following reasons.

When a dough ball during fermentation is pressed, if the dough ball is rapidly pressed with a mechanical force, without a consideration of fermentation state of dough, the dough crust has insufficient honeycomb structures because of insufficient fermentation, or bubbles of gas are crushed not to form the porous honeycomb structure. Further, if dough is pressed at a temperature of above 100°C to prevent retraction after pressing that commonly occurs in conventional pre-baked pizza marketed as a frozen food, the yeast may be damaged, which also fails to obtain a good texture raised crust.

The present invention has been made to solve the aforementioned problems. It is therefore an object of the present invention to provide a method for flattening fermentable dough to which yeast is added, comprising that a fermentable dough ball placed between a lower plate and heating upper plate is pressed by regulating press speed in response to the fermentation state of the dough, while the heating upper plate contacts the upper layer of the dough ball to accelerate it's fermentation. Flattening and fermentation of fermentable dough is attained in a short time in the method.

It is another object of the invention to provide an apparatus suitable for flattening fermentable dough to which yeast is added, while accelerate fermentation of dough.

It is further object of the invention to provide a dough crust produced by flattening fermentable dough to which yeast is added while accelerating fermentation of dough, which result in a smooth finished surface and a good texture and good feeling when eaten after baking the dough crust.

According to the first aspect of the present invention, a method for flattening a piece of fermentable dough by a press-machine having a lower plate and a heated upper plate comprising a step of placing a given amount of the dough on the lower plate, a step of moving the heated upper plate or the lower plate to bring into contact the dough with the heated upper plate, so that the contacted layer of the dough is accelerated to ferment, and a step of regulating a distance between the heated upper plate and the lower plate so that the layer of dough relaxed by the fermentation is spread around the lower layer of the dough.

In this method, a press speed is regulated in response to the fermentation state of dough. As a result, a flattened dough crust having honeycomb structure of gas from fermentation, soft texture and good feeling when eaten after baked is obtained. Long time for a secondary fermentation is not needed. Thus, the time and labor required for flattening dough can be drastically reduced. Also, flattening of dough is effected by spreading a softening portion of fermented dough, and therefore, driving power of the press machine can be reduced.

In the embodiment of the present invention, a movement of the heated upper plate and lower plate is held for a predetermined period for the fermentation under the pressed to contact the dough with the heated upper plate, and the movement is resumed after a lapse of the period. Regarding to this, when large size dough is flattened, it is possible to recover the temperature of the heated upper plate which is dipped at the time of contacting with the dough. As a result, the flattening speed can be reliably adapted to the fermentation state of the dough. Further, it is not necessary to design the upper plate to have large heat capacity.

In the embodiment of the present invention, the press machine having fixed the upper plate provided with a heating element and a vertically moving lower table, wherein comprising of a step of placing the given amount of dough on the lower table, a step of moving upward the lower table to press and contact the dough with to the upper plate, and the lower table after press-contacting the dough with the upper plate move upward and hold repeatedly depending on fermentation state of the dough. As a result, a layer of the dough contacting the heated upper plate is relaxed and is pushed out of, and thereafter, a next layer of dough is attained to contact the heated upper plate successively. It is possible to compensate the temperature of the heated upper plate that has been lowered by the next layer having a lower temperature.

In the embodiment of present invention, the lower plate or table on which the dough is placed has a rough upper surface to prevent the bottom surface of dough from sliding. As a result, the bottom layer of dough is fixed during pressing process. Therefore, the flattening of the dough is effected by spreading the relaxed upper layer of dough around the lower layer. Accordingly, it is possible to obtain a dough crust having a smooth finished surface after forming it.

Further, according to the present invention, a moving speed and moving distance, or the hold period of the lower plate is are set to optimal values obtained from experimental flattening of the same compositions of dough and stored in a memory of a regulator, and a driving mechanism which drives the lower plate based on the data is regulated. As a result, it is possible to regulate automatically the moving speed and moving distance of the lower plate and to obtain the dough having a good texture.

In the embodiment of the present invention, the lower plate has a tray detachably installed thereon, and the given amount of the dough are placed on a rough surface of the tray.

In the embodiment of the invention, the apparatus comprises a forming tray installed detachably on the lower plate, and a given amount of the dough are placed on the rough surface having a protrusion and recess formed on the forming tray. As a result, it is possible to form the dough into any shapes thereof by selecting the suitable forming tray and to take easily out the dough crust after forming, and it is suitable for continuously forming the dough.

According to the second aspect of the present invention, an apparatus for flattening a piece of fermentable dough, comprises a vertically movable table arranged in a horizontal direction and a heated upper plate arranged upwardly apart from the table, an driving means connected to the table for moving the table upward and downward, a tray detachably installed on the table, a sensor for detecting a position or a speed of the table, and a regulator for controlling a moving speed of the table, wherein the dough placed on the tray is pressed and contacted with the heated upper plate so that the contacted layer of dough is promptly fermented and soften to spread into a flattened dough crust.

According to the apparatus described the above, the elevating driving mechanism controls automatically an elevating speed or distance or holding period of the elevating table on the basis of the signals of sensor that can detect a position or speed thereof. Therefore, the dough can be automatically press-formed in a short time. An operator dose only putting the dough on the forming tray and then pushing start buttons.

In the embodiment of the present invention, a temperature sensor is installed in the heated upper plate, the temperature sensor output a detected signal to the regulator.

Furthermore, the moving speed and distance or holding period of the elevating table are set beforehand and stored in a memory, the elevating table is controlled on the basis of the data in response to a dough size or forming conditions such as room temperature. As a result, it is easy to select the elevating speed or holding position and period of the elevating table adapted for such environments as size or temperature.

In the embodiment of the present invention, the heated press plate is provided with a temperature sensor, and the temperature sensor is connected to the control unit, the temperature sensor is attached on the bottom face of a recess in the center of the press plate, and a position of the temperature sensor is arranged at a substantially intermediate in vertical direction of the press plate. As a result, the temperature of the heated press plate can be suitably controlled to that of promoting fermentation of the dough without extinct yeast in the dough and the temperature of the dough can be estimated.

In another embodiment of the invention, a plurality of sizes of the forming trays are prepared, and the elevating table is provided with loading claws capable of detachably installed the respective sizes of the forming trays. These trays have rough surface, for example, small protrusions and recess on the surface. Preferably, the press plate is provided with an adhesion preventing material that does not allow the dough to adhere to the surface thereof.

### Brief description of the drawings

Fig. 1 is a front view of a pizza dough forming apparatus according to an embodiment of the present invention.
Fig. 2 is a side view of the pizza dough forming apparatus according to the embodiment of the present invention.
Fig. 3 is a longitudinally sectional side view of the pizza dough forming apparatus according to the embodiment of the present invention.
Fig. 4 illustrates the arrangement of loading claws.
Fig. 5 is a sectional view taken along line V-V in Fig. 4.
Fig. 6 is a plan view of a forming tray.
Fig. 7 is a sectional view taken along line VII-VII in Fig. 6.
Fig. 8 is a sectional view taken along VIII-VIII in Fig. 3.
Fig. 9 is an explanatory view illustrating the processes of forming dough.
Fig. 10 illustrates a control circuit.
Fig. 11 is a sectional view of a forming die.

### Description of the preferred Embodiments

An embodiment of the present invention will now be described with reference to the accompanying drawings.

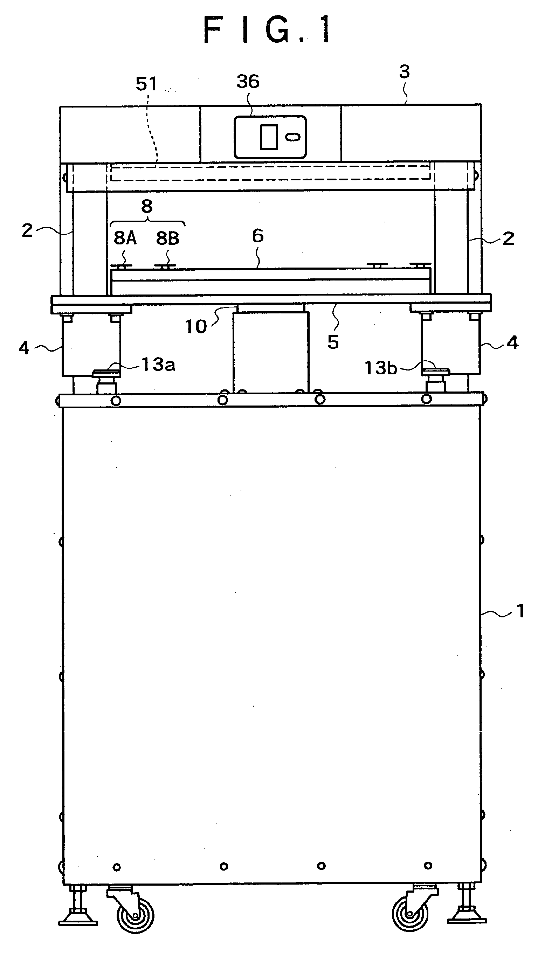

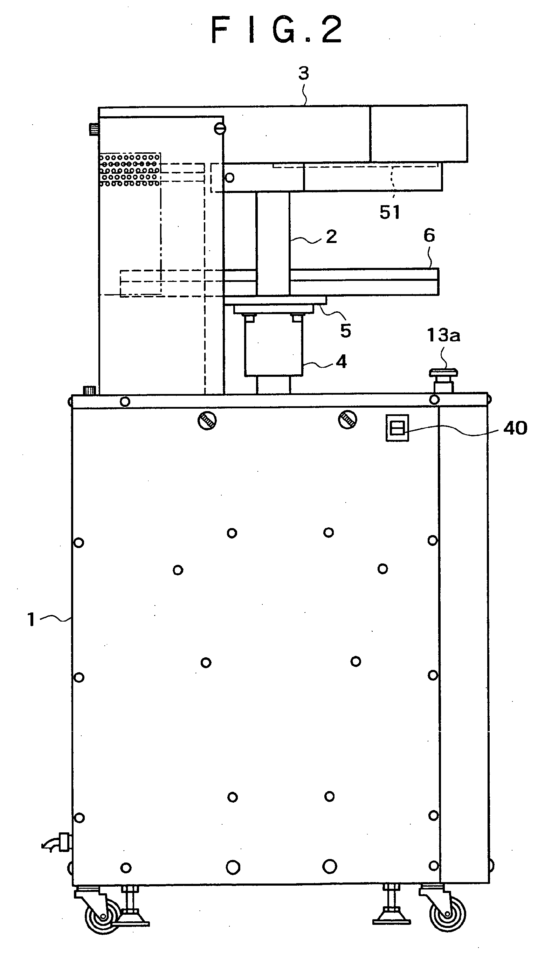

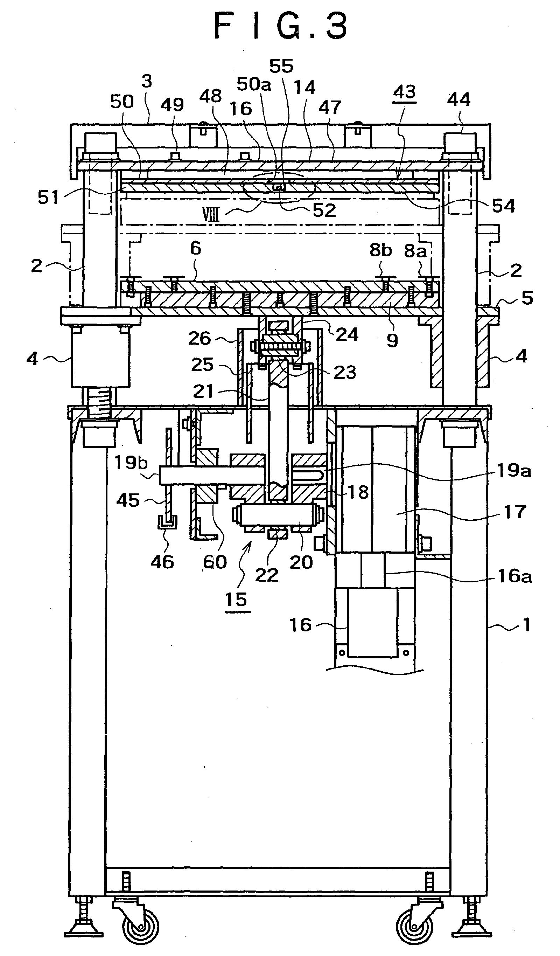

Fig. 1 is a front view illustrating a pizza dough forming apparatus according to an embodiment of the present invention. Fig. 2 is a side view illustrating the embodiment of the pizza dough forming apparatus according to the present invention. Fig. 3 is a longitudinally sectional side view illustrating the embodiment of the pizza dough forming apparatus according to the present invention.

In the respective drawings, a pair of struts 2,2, which is directed in the vertical direction, is provided on a housing 1, and an upper cover 3 is attached onto the struts 2. Sliding members 4 are slidably attached to the struts 2, respectively, and a supporting plate 5 is fixed onto the sliding members 4. An elevating table (a lower plate) 6 is attached onto the supporting plate 5. A pair of push button switches 13a and 13b is provided on the left and right sides of the housing 1. A power switch 40 is provided on the left side surface of the housing 1.

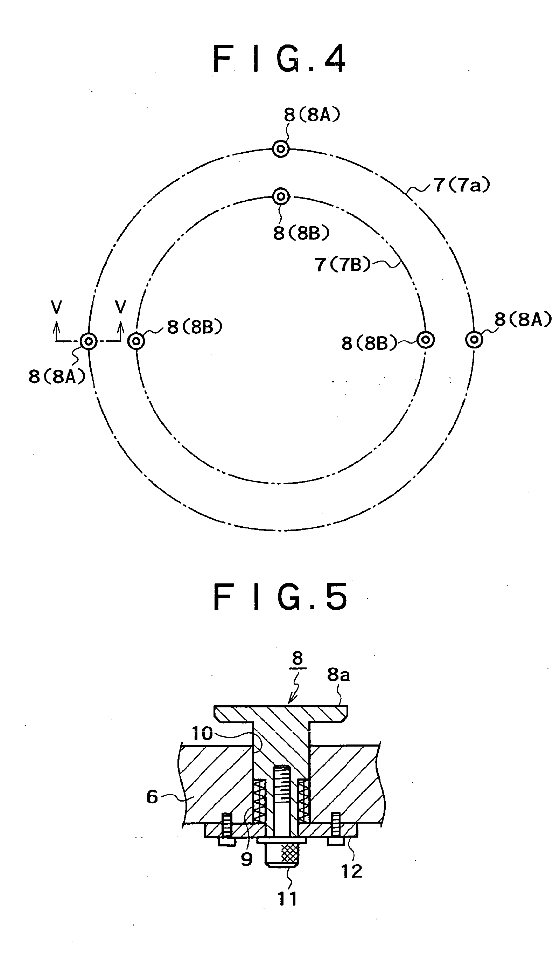

A plurality of loading claws 8 is provided for install a forming tray 7 on the elevating table 6. As shown in Fig. 4, the loading claws 8 is comprised of three outside loading claws 8A along the periphery of a larger-diameter forming tray 7A represented by a one-dotted chain line and three inside loading claws 8B along a small-diameter tray 7B represented by a two-dotted chain line.

As shown in Fig. 5, each of the loading claws 8 is formed to have a flange 8a at its upper end. The loading claw 8 is slidably fitted into a hole 10 that is formed in the elevating table 6, is biased in its protruding direction with a spring 9, and is held by locking a stopper screw 11 in a locking plate 12.

As shown in Fig. 3, the supporting plate 5 is adapted to move up or down by means of an elevation driving mechanism 15 that is provided below the plate.

The elevation driving mechanism 15 includes a driving motor 16, and reduction gears 17 connected to a motor shaft 16a of the driving motor 16. A crank arm 18 is secured to a pair of crankshafts 19a and 19b. One crankshaft 19a is connected to the reduction gears 17, and the other crankshaft 19b is supported by a bearing 60. A crank pin 20 is secured to a front end of the crank arm 18, and an elevating rail 21 is connected to the crank pin 20 via a bearing 22.

A connecting plate 24 that is attached to the underside of the supporting plate 5 is connected to an upper end of the elevating rail 21 via a universal joint 23. An inner cover 25 is attached to a lower end of the connecting plate 24. The inner cover 25 is adapted to move up or down within an outer cover 26 that is attached onto the housing 1.

When the driving motor 16 rotates, the crankshafts 19a and 19b rotate via the reduction gears 17. This rotation is transmitted to the crank arm 18 to turn the crank pin 20 about the crankshafts 19a and 19b. As a result, the elevating rail 21 connected to the crank pin 20 moves up or down, and the supporting plate 5 connected to the elevating rail 21 then moves up or down. A pulse generating board 45 is attached to the crankshaft 19b. The rotation of the pulse generating board 45 is detected with a position sensor 46 so that the vertical position and the elevating speed of the elevating table 6 can be detected. In the embodiment of the present invention, the crank arm is used in the elevation driving means, a conventional rack and pinion mechanism or hydraulic piston cylinder can be used. Further, the sliding members 4 can be omitted by supporting the elevating table on the driving mechanism.

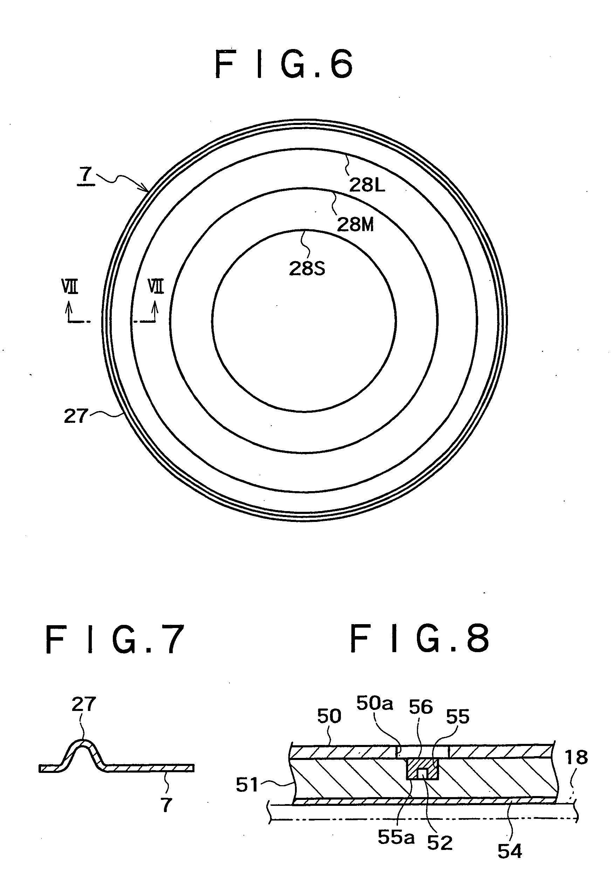

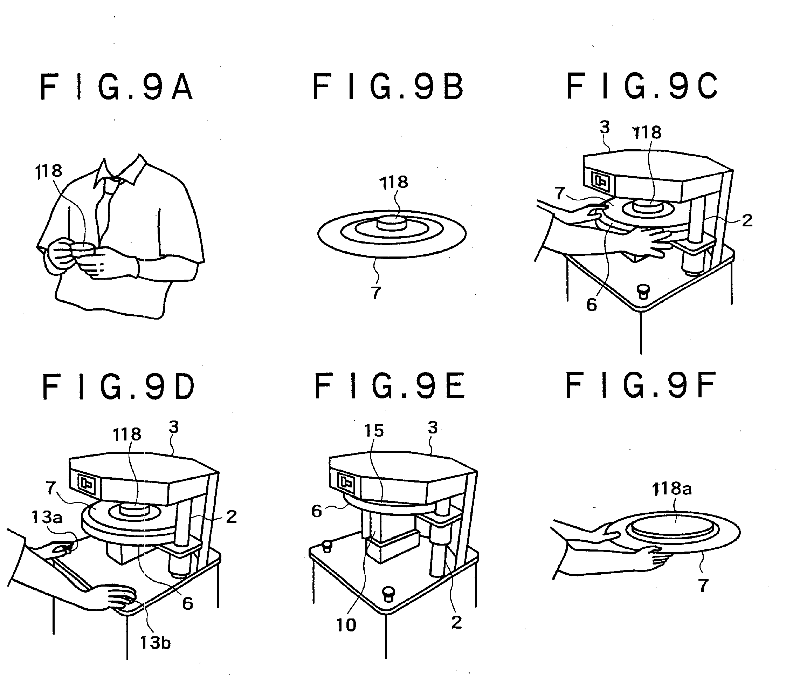

Fig. 6 illustrates the surface of the forming tray 7 on which dough is placed, and Fig. 7 is a sectional view taken along line VII-VII of Fig. 6. The forming tray 7 includes a disc made of a metal, for example, aluminum, aluminum alloy, titan, or the like, which is lightweight, high thermal conductive, and strong against thermal deformation. A reinforcing rib 27 having an inverted U-shaped section is formed at the periphery of the forming tray 7. On the surface of the forming tray 7, fine grooves are stamped as marks for displaying respective forming sizes, such as a large-diameter circle 28L, a middle-diameter circle 28M, and a small-diameter circle 28S. Further, dam can be provided for regulating the forming size of dough along the diameter circle 28L, 28M and 28S, respectively. The refined rough surface are provided by the sandblast treatment on the upper surface of the forming tray 7 on which the dough is placed in order to prevent the sliding of dough under the pressing. The upper surface of the forming tray 7 is subjected to alumite treatment in order to improve the release of dough after forming the dough and to form the asperities without edge portion.

Referring back to Fig. 3, a heating element 43 is provided above the struts 2. The heating element 43 is attached to the underside of a mounting plate 47 that is fixed to upper ends of the struts 2 with fixing screws 44. That is, the heating element 43 is constructed such that a rib-shaped pressing member 48 is fixed to the underside of the mounting plate 47 with setscrews 49, and a press plate 51 made up the upper plate is fixed to the underside of the pressing member 48 with a heater 50 interposed therebetween. The press plate includes, for example, a far-infrared heating material made of the mixture of carbide and titan, preferably, as an embodiment of the present invention, but the heating material is not limited to such a far-infrared heating material. Further, the present invention has been described that the heated upper plate is fixed, while the lower plate is provided to move up or down on the elevating table 6, and however, the present invention is not limited thereto. That is, a press machine having a fixed lower plate and a heated upper plate moving downward can be used.

Fig. 8 is a partially enlarged view of a portion VIII in Fig. 3. As shown in Fig. 8, an adhesion preventing material 54 is thinly applied onto the surface (underside) of the press plate 51 so that pressed dough 118 does not stick to the press plate 51. As the adhesion preventing material 54, Teflon coating or edible oil may be thinly spread. At the central part of the press plate 51 is formed a recess 55 that has a bottom face 55a at a substantially intermediate position of the press plate 51 in its vertical direction. A temperature sensor 52 is attached to the bottom face of the recess 55. Mold 56 is applied to the recess 55 so as to cover the exterior of the temperature sensor 52. A circular cutout 50a is formed at the central part of the heater 50 so that radiant heat is not applied to the temperature sensor. As a result, the temperature of the press plate 51 is detected with the temperature sensor 52 so as to regulate the current carrying of the heated heater, and therefore, the temperature of the press plate 51 is controlled to that of promoting the fermentation of the dough 118.

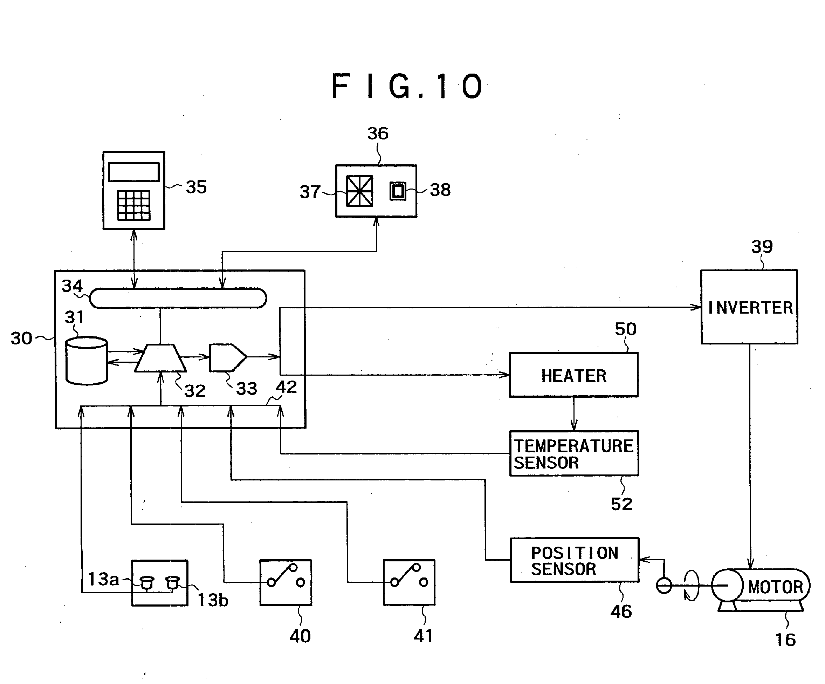

Fig. 10 illustrates a control circuit. In Fig. 10, reference numeral 30 denotes a central processing unit (CPU) 30 that comprises a database 31 in which data such as formation time, temperature, and the thickness of dough are stored, a calculating unit 32, an executing unit 33 which sends a control signal to heater 50 or motor 16, a communication port 34, and an interface 42 which connects to the respective switches or sensors. A setting unit 35 sets operation of the heater or motor, and a display unit 36 is provided at the front face of the upper cover 3. The display unit 36 comprises a display 37 and an operation button 38. An inverter 39 controls the driving motor 16 based on the output from the executing unit 33. The inverter 39 has effected to PWM (Pulse Width Modulation) control of motor 16 based on the control signals from the executing unit 33. Signals from the two start push buttons 13a and 13b, the power switch 40, a safety device 41, a position sensor 46, and a temperature sensor 52 are input from the interface 42 to the calculating unit 32.

Generally, the fermentation speed of the dough varies depending on the conditions such as the properties of dough to be used, and environments (room temperature, humidity and the like). Further, the fermentation speed depends on contacting area of dough with the heated press plate 51 in first pressing step, that is, how set firstly moving distance of the elevating table 6. When the dough is contacted with the press plate 51 by the first press, the temperature of the press plate 51 is lowered. Lowering of the temperature depends on the thermal capacity of the press plate 51 and the size of dough. If the thermal capacity of press plate 51 is designed to have too large capacity, it causes the consumption of the unnecessary electric power, and therefore, it is necessary that the thermal capacity of press plate 51 be designed a appropriate for a size of most frequently forming dough can form. Accordingly, when the dough with larger size is formed, or when the environmental temperature is extremely low, the moving upward of the elevating table 6 holds in a state that the dough is contacted with the press plate 51 by the first pressing, until the temperature of the press plate 51 recovers, and the dough is promptly fermented to soften. Then moving upward of the elevating table 6 resumes. The specifications of moving of the elevating table 6, moving speeds or distances or holding positions and holding times and the like, is preferably set to optimal values, which obtained from one or more experimental forming executions and these optimal values are stored in the database 31. The elevating table 6 is controlled by reading out the control data from the database 31, based on the environmental temperature or a size of dough that is set in the setting unit 35.

In the embodiment of the present invention, in the first press step, the elevating table 6 is moved upward until the dough placed on the forming tray 7 is pressed into 1/2 in thickness of the dough, so that the fermentation of the dough is accelerated to soften the dough, and press out the fermented portion of dough to spread around the lower portion of the dough. The moving speed of the elevating table 6 is regulated so as to spread fermented dough around the lower portion of the dough successively. In a case of the dough with L size, the ascent of the elevating table 6 is caused to stop for a specified time to ferment the contacted portion of dough with the heated press plate 51 in a state that the dough is pressed into 1/2 in thickness by the first pressing. After the contacted portion of dough is fermented and soften, moving upward of the elevating table resumes. If necessary, the elevating table 6 can be controlled to move and hold intermittently. The moving distances and holding periods of the elevating table 6 are stored in the database 31, these data are read out for controlling the motor 16 from the database 31 on the base setting data in the setting unit 35. Further, the temperature of the press plate 51 may be set depending on a size of dough in consideration of lowering of the temperature in the press plate 51 when contacts with dough. preferable that the temperature of the press plate 51 be preferably set 48~52°C in temperature not to extinct yeast in the dough.

The operation of the apparatus for forming dough will now be described.

In the initial state, the elevating table 6 of the pizza dough forming apparatus positions in upward, abutting the press plate 51. In the power switch 40 on, electric power is supplied to the apparatus, the display 37 flashes on and off, and an electric current is applied to the heater 50 to heat the press plate 50. When the press plate 51 reaches at a given temperature, the display 37 is changed to turn on, informing the pizza forming apparatus is available (standby). In this standby state, when the right and left start push buttons 13a and 13b are simultaneously pushed by operator's both hands, the elevating table 6 moves down, as shown in Figs. 1 to 3. The method of forming dough is explained as follow.

Firstly, a size of dough, the temperature of environments and the like are set in a setting unit 35. In this embodiment, the dough having three types of size are provided, i.e., large size (350 mm of the diameter after forming), medium size (250 mm of the diameter after forming) and small size (150 mm of the diameter after forming). As shown in Fig. 9(a), dough 118, which has been primarily fermented in a refrigerator, is taken out. The taken-out dough 118 is formed into a disk shape having a thickness of about 30 to 50 mm by hand. Then, as shown in Fig. 9(b), the disk of dough 118 is put on the central part of the forming tray 7. Then, as shown in Fig. 9(c), the forming tray 7 having the dough 118 thereon is installed to the elevating table 6. Specifically, in the case of a large-sized forming tray 7A, the tray is allowed to engage with the outside loading claws 8A (at this time, the inside loading claw 8B is pressed by forming tray 7A to move down), and in the case of a small-sized forming tray 7B, the tray is allowed to engage the inside loading claws 8B.

Next, as shown in Fig. 9(d), when the right and left start push buttons 13a and 13b are simultaneously pushed by the operator's hands, the CPU 30 operates. The calculating unit 32 compares input data in the setting unit 35 with the data stored in the database 31, and control signals are calculated. Then, the control signals are sent from the executing unit 33 to the inverter 39. The position of the forming tray 7 is detected with the position sensor 46, the detected signal feedback to the CPU 30 to control the driving motor 16. The rotation of the driving motor 16, in other words, the ascent of the forming tray 7 is controlled according to the values set in the setting unit 35. As shown in Fig. 9(e), the elevating table 6 moves upward at high speed due to the control by CPU. As a result, the dough is pressed and formed into about 1/2 in thickness (15 to 25 mm) and the fermentation of dough is promoted by enlarging the contact area of the disk of dough with the heated press plate 51. The fermented layer of dough is pressed out to spread around lower layer of the dough, a next layer of dough contacts with the heated press plate 51 and is fermented and spread around the lower layer of dough successively. Thus, the secondary fermentation and the forming, specifically, flattening of dough are completed in about thirty seconds. Thereafter, when the right and left start push buttons 13a and 13b are simultaneously pushed, the elevating table 6 moves down. As shown in Fig. 9(f), the forming tray 7 with the dough 118 flattened to 1~5mm in thickness is taken out from the apparatus.

In the case that a large size disk of dough is formed in a apparatus provided with a heated press plate having relatively small heat capacity, when the dough is pressed into 1/2 in thickness, temperature of the press plate 51 is lowered, the press plate 51 holds in this position for a predetermined period for waiting recovering temperature thereof. The elevating speed of the elevating table 6 is controlled so that the dough contacted with the press plate 51 is effected on the fermentation and the diameter expansion is effected by spreading the dough relaxed by the fermentation.

According to inventor's experiment, when the dough is press-formed while promoting the fermentation by heating it, if a bottom surface of dough contacting to the surface of the lower plate slides during pressing, the bottom surface of the flattened dough crust is uneven. A dough crust having a smooth surface is not obtained. It is important that the bottom surface of dough is fixed on the surface of the lower plate or the forming tray 7 as much as possible.

A upper layer of dough is promptly fermented to relax and press out to spread around a lower layer of dough fixed to the lower plate. In this method, a dough crust having smooth surface is obtained.

A big pressing power is required for flattening and spreading a dough ball added no yeast, un-fermentable dough. A motor having a large torque is needed. In the present invention, however, fermented and relaxed dough is pressed to spread as described above, a big pressing power is not needed, the motor is required not so much torque.

In the embodiment of present invention, after taking out flattened dough crust from the apparatus, the operator pushes the right and left push buttons 13a and 13b for long period (about 3 seconds). The elevating table 6 moves up, and the dough forming apparatus returned to a standby state. If the formation is continuously performed, another dough is put on the elevating table 5 which is downward and the right and left start push buttons 13a and 13b are simultaneously pushed, so that dough formation is performed as described above.

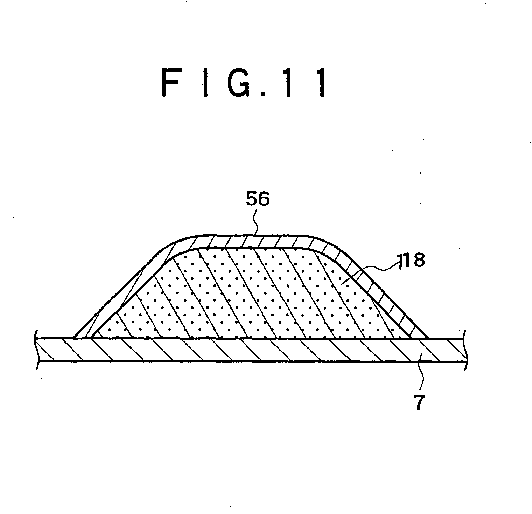

Fig. 11 illustrates a shaping die for shaping a dough disk 118 into a round shape, as shown in Figs. 9(a) and 9(b). The shaping die 56 has a substantially hollow truncated cone shape. Edible oil is applied to the inner surface of the forming die 56, primarily fermented pizza dough 118 is put on the forming tray 7, and the shaped of the dough is arranged by pressing it with the shaping die 56 from the upside. As a result, rounding-off of dough and application of edible oil can be simultaneously performed.

As described above, since the dough 118 is press-formed with the press plate 51 in response to the fermentation speed of the dough 118, bubbles of the carbon dioxide gases generated by the fermentation is maintained in a state of closed cells in the dough. As a result, it is possible to flatten fermentable dough in a short time by a relatively small driving force of motor and to obtain a raised dough form having high quality such as a smooth finished surface and a good texture. Long period for the secondary fermentation process for a prolonged time as in a conventional case is not required. As a result, the time and labor required for manufacturing a dough form can be drastically reduced. Also, according to the forming method of the present invention, dough can hold its formed shape, whereas hand-spread dough decreases in diameter with the lapse of time.

## Claims

1. A method for flattening a piece of fermentable dough by a press-machine having a lower plate and a heated upper plate comprising:
a step of placing a given amount of the dough on the lower plate,
a step of moving the heated upper plate or the lower plate to bring into contact the dough with the heated upper plate, so that the contacted layer of the dough is promptly fermented, and
a step of controlling a distance between the heated upper plate and the lower plate so that the layer of dough relaxed by the fermentation is spread around the lower layers of the dough.

2. The method for flattening a piece of fermentable dough according to claim 1,
wherein a movement of the heated upper plate and lower plate is held for a predetermined period for the fermentation under the press-contacting the dough with the heated upper plate, and the movement is resumed after the period.

3. The method for flattening a piece of fermentable dough according to claims 1 or 2,
wherein the press machine having fixed the upper plate provided with a heating element and a vertically moving lower table, wherein comprising a step of placing the given amount of dough on the lower table, a step of moving upward the lower table to press and to contact the dough with the upper plate, and a step of controlling a moving speed of the lower table.

4. The method for flattening a piece of fermentable dough according to claim 3,
wherein the lower table moves and holds repeatedly depending on fermentation state of the dough, after first press-contacting the dough with the upper plate.

5. The method for flattening a piece of fermentable dough according to any one of claims 1 to 4,
wherein the lower plate or table on which the dough is placed has a rough upper surface to fix the bottom surface of the dough for prevent the bottom surface from sliding.

6. The method for flattening a piece of fermentable dough according to any one of claims 1 to 4,
wherein the press machine is provided with driving means to move the lower table, and a regulator having a memory to control the driving means, data of moving speeds and distances or holding periods of the lower table are obtained from a experimental flattening process using a same kind of dough and stored in the memory, and the lower table is controlled by the regulator on the basis of the output from the memory.

7. The method for flattening a piece of fermentable dough according to any one of claims 1 to 3,
wherein the lower plate has a tray having a rough surface detachably installed thereon, and the given amount of the dough are placed on a rough surface of the tray.

8. The method for flattening a piece of fermentable dough according to claims 1 or 3,
wherein the fermentable dough is a primarily fermented dough for a pizza pie.

9. The method for flattening a piece of fermentable dough according to claim 8,
wherein the given amount of dough is shaped with a hollow truncated cone die.

10. A flattened dough crust prepared by the method for flattening a piece of fermentable dough according to claims 1 or 3.

11. An apparatus for flattening a piece of fermentable dough, comprising
a vertically movable table arranged in a horizontal direction and a heated upper plate arranged upwardly apart from the table,
an driving means connected to the table for moving the table upward and downward,
a tray detachably installed on the table,
a sensor for detecting a position or a speed of the table, and
a regulator for controlling a moving speed of the table;
wherein the dough placed on the tray is pressed and
contacted with the heated upper plate so that the contacted layer of dough is promptly fermented and relaxed to spread around the lower layer of the dough and next layer of the dough is contacted with the heated upper plate to be fermented and relaxed successively into a flattened dough crust.

12. The apparatus for flattening a piece of fermentable
dough according to claim 11 ,
wherein further comprising of a memory means stored data of moving speeds and moving distance, holding periods of the table, the regulator being selected the data depending on a size of dough or other environmental conditions such as room temperature.

13. The apparatus for flattening a piece of fermentable dough according to claim 11, further comprising of a temperature sensor installed in the heated upper plate, the temperature sensor being output a detected signal to the regulator.

14. The apparatus for flattening a piece of fermentable dough according to claim 12, wherein the data stored in the memory means are obtained from a experimental flattening process using a same kind of dough.

15. The apparatus for flattening a piece of fermentable dough according to claim 11, further comprising of a plurality of the trays in different sizes, wherein the table is provided with several loading claws for detachably installing the trays.

16. The apparatus for flattening a piece of fermentable dough according to claim 11, wherein the tray has a rough surface to prevent the bottom surface of the dough from sliding or spreading.

17. The apparatus for flattening a piece of fermentable dough according to claim 11, wherein the heated upper plate is provided with an adhesion preventing material on the surface contacting with the dough.

18. The apparatus for flattening a piece of fermentable dough according to claim 13, wherein the temperature sensor is attached to the bottom face of a recess of the heated upper plate, and the bottom face is positioned at a substantially intermediate position of the upper plate in the thickness direction.
